# EUROPEAN PATENT SPECIFICATION

(11) **EP 1 458 486 B1**
(45) Date of publication and mention of the grant of the patent: **17.09.2008**
(21) Application number: 02805666.1
(22) Date of filing: 19.12.2002
(51) Int. Cl.: B01L 3/00

(54) **ARRAY PLATES AND METHOD FOR CONSTRUCTING ARRAY PLATES**
ARRAYPLATTEN UND VERFAHREN ZUR HERSTELLUNG VON ARRAYPLATTEN
PLATEAUX A RESEAU ET PROCEDE DE FABRICATION ASSOCIE

(30) Priority: 19.12.2001 US 344084 P
(43) Date of publication of application: 22.09.2004
(73) Proprietor: Affymetrix, Inc., Santa Clara, CA 95051 (US)
(72) Inventor: SPENCE, Eric, San Jose, California 95123 (US)
(74) Representative: UEXKÜLL & STOLBERG
(86) International application number: PCT/US2002/041106
(87) International publication number: WO 2003/053586

(56) References cited:
- EP-A- 0 347 579
- WO-A-01/34290
- WO-A-01/54814

## Description

The invention relates to methods for making an array plate and to array plates.

### SUMMARY OF THE INVENTION

According to a first aspect a method for making an array plate is provided, comprising the steps of
a) providing a body comprising a plurality of cavities wherein each cavity is open at two ends and has a recess at one of the ends;
b)providing a wafer comprising a plurality of arrays on its surface;
c) applying adhesive in the recess of the body;
d) aligning the body over the wafer so that the cavities are placed on the wafer wherein the cavities surround and enclose an array; and
e) fixedly attaching the wafer to the body to define wells.

According to another aspect an array plate is provided comprising:
a) a wafer comprising a plurality of arrays on its surface;
b) a body comprising a plurality of cavities that form walls of wells onto the body wherein each cavity is open at two ends; and wherein each cavity has a recess in the wall at one of the ends;
c) said wafer fixedly connected to one end of the body by an adhesive wherein the adhesive is applied onto the recess of the wall.

According to another aspect a method for making an array plate is provided, comprising the steps of
a) providing a body comprising a plurality of cavities that form walls of wells onto the body wherein the body is open at two ends and wherein the body has gaskets or o-rings on the walls at one of the ends;
b) providing a wafer comprising a plurality of arrays on its surface;
c) providing a clamping plate;
d) aligning the wafer over the end of the body where the gaskets or o-rings are located so that the cavities are placed on the wafer wherein the cavities surround and enclose an array;
e) fixedly attaching the wafer to the body with the use of the clamping plate; and
f) fixedly attaching the clamping plate to the body outside the perimeter of the wafer.

According to another aspect an array plate is provided comprising:
a) a wafer comprising a plurality of arrays on its surface;
b) a body comprising a plurality of cavities that form walls of wells onto the body wherein each cavity is open at two ends; and wherein the body has gaskets or o-rings on the walls at one of the ends;
c) a clamping plate;
d) said wafer fixedly connected to that end of the body where the gaskets or o-rings are located with the use of the clamping plate.

### BRIEF DESCRIPTION OF THE DRAWING

Fig. 1 depicts a system of this invention having an array plate, fluid handling device, array plate reader and computer;
Fig. 2 depicts the scanning of an array plate by an array plate reader,
Fig. 3 depicts a biological plate;
Fig. 4 depicts the mating of a wafer containing many arrays with a body having channels to create an array plate;
Fig. 5 depicts an array plate in cross section having a body attached to a wafer to create closed wells in which a probe array is exposed to the space in the well;
Fig. 6 is a top-down view of a well containing an array;
Fig. 7 depicts a method of producing an array of oligonucleotide probes on the surface of a substrate by using a mask to expose certain parts of the surface to light, thereby removing photoremovable protective groups, and attaching nucleotides to the exposed reactive groups.
Figs. 8A-8C depict an embodiment of this invention having a wafer and a grid with a recess and/or gaskets or o-rings wherein adhesive is placed in the recess for attachment of the wafer to the grid.
Figs. 9A-9C, depicts an embodiment of this invention, wherein the attachment of a wafer with a grid with a clamping plate.

### DETAILED DESCRIPTION OF THE INVENTION

Reference will now be made in detail to exemplary embodiments of the invention. While the invention will be described in conjunction with the exemplary embodiments, it will be understood that they are not intended to limit the invention to these embodiments.

The invention therefore relates to diverse fields impacted by the nature of molecular interaction, including chemistry, biology, medicine and diagnostics. Efficient assessment of molecular interactions would be advantageous in settings in which large amounts of information are required quickly, such as in clinical diagnostic laboratories or in large-scale undertakings such as the Human Genome Project

The present invention has many preferred embodiments and relies on many patents, applications and other references for details known to those of the art.

As used in this application, the singular form "a," "an," and "the" include plural references unless the context clearly dictates otherwise. For example, the term "an agent" includes a plurality of agents, including mixtures thereof.

An individual is not limited to a human being but may also be other organisms including but not limited to mammals, plants, bacteria, or cells derived from any of the above.

Throughout this disclosure, various aspects of this invention can be presented in a range format It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

The practice of the present invention may employ, unless otherwise indicated, conventional techniques and descriptions of organic chemistry, polymer technology, molecular biology (including recombinant techniques), cell biology, biochemistry, and immunology, which are within the skill of the art. Such conventional techniques include polymer array synthesis, hybridization, ligation, and detection of hybridization using a label. Specific illustrations of suitable techniques can be had by reference to the example herein below. However, other equivalent conventional procedures can, of course, also be used. Such conventional techniques and descriptions can be found in standard laboratory manuals such as Genome Analysis: A Laboratory Manual Series (Vols. I-IV), Using Antibodies: A Laboratory Manual, Cells: A Laboratory Manual, PCR Primer: A Laboratory Manual, and Molecular Cloning: A Laboratory Manual (all from Cold Spring Harbor Laboratory Press), Stryer, L. (1995) Biochemistry (4th Ed.) Freeman, New York, Gait, "Oligonucleotide Synthesis: A Practical Approach" 1984, IRL Press, Lond*on,* Nelson and Cox (2000), Lehninger, Principles of Biochemistry 3rd Ed., W.H. Freeman Pub., New York, NY and Berg et al. (2002) Biochemistry, 5th Ed., W.H. Freeman Pub., New York, NY.

The present invention can employ solid substrates, including arrays in some preferred embodiments. Methods and techniques applicable to polymer (including protein) array synthesis have been described in United States Serial No. 09/536,841, WO 00/58516, United States Patent Nos. 5,143,854, 5,242,974, 5,252,743, 5,324,633, 5,384,261, 5,405,783, 5,424,186, 5,451,683, 5,482,867, 5,491,074, 5,527,681, 5,550,215, 5,571,639, 5,578,832, 5,593,839, 5,599,695, 5,624,711, 5,631,734, 5,795,716, 5,831,070, 5,837,832, 5,856,101, 5,858,659, 5,936,324, 5,968,740, 5,974,164, 5,981,185, 5,981,956, 6,025,601, 6,033,860, 6,040,193, 6,090,555, 6,136,269, 6,269,846 and 6,428,752, in PCT Applications Nos. PCT/US99/00730 (International Publication Number WO 99/36760) and PCT/US01/04285.

Patents that describe synthesis techniques in specific embodiments include United States Patent Nos. 5,412,087, 6,147,205, 6,262,216, 6,310,189, 5,889,165, and 5,959,098. Nucleic acid arrays are described in many of the above patents, but the same techniques are applied to polypeptide arrays.

Nucleic acid arrays that are useful in the present invention include those that are commercially available from Affymetrix (Santa Clara, CA) under the brand name GeneChip^{®}. Example arrays are shown on the website at affymetrix.com.

The present invention also contemplates many uses for polymers attached to solid substrates. These uses include gene expression monitoring, profiling, library screening, genotyping and diagnostics. Gene expression monitoring, and profiling methods can be shown in United States Patents Nos. 5,800,992, 6,013,449, 6,020,135, 6,033,860, 6,040,138, 6,177,248 and 6,309,822. Genotyping and uses therefore are shown in USSN 60/319,253, 10/013,598, and United States Patent Nos. 5,856,092, 6,300,063, 5,858,659, 6,284,460, 6,361,947, 6,368,799 and 6,333,179. Other uses are embodied in United States Patents Nos. 5,871,928, 5,902,723, 6,045,996, 5,541,061, and 6,197,506.

The present invention also contemplates sample preparation methods in certain preferred embodiments. Prior to or concurrent with genotyping, the genomic sample may be amplified by a variety of mechanisms, some of which may employ PCR *See*, e.g., PCR Technology: Principles and Applications for DNA Amplification (Ed. HA Erlich, Freeman Press, NY, NY, 1992); PCR Protocols: A Guide to Methods and Applications (Eds. Innis, et al., Academic Press, San Diego, CA, 1990); Mattila et al., Nucleic Acids Res. 19, 4967 (1991); Eckert et al., PCR Methods and Applications 1, 17 (1991); PCR (Eds. McPherson et al., IRL Press, Oxford); and United States Patent Nos. 4,683,202, 4,683,195, 4,800,159 4,965,188,and 5,333,675. The sample may be amplified on the array. See, for example, U.S Patent No 6,300,070 and United States Patent Application 09/513,300.

Other suitable amplification methods include the ligase chain reaction (LCR) (*e*.*g*., Wu and Wallace, Genomics 4, 560 (1989), Landegren et al., Science 241, 1077 (1988) and Barringer et al. Gene 89:117 (1990)), transcription amplification (Kwoh et al., Proc. Natl. Acad. Sci. USA 86, 1173 (1989) and WO88/10315), self-sustained sequence replication (Guatelli et al., Proc. Nat. Acad. Sci. USA, 87, 1874 (1990) and WO90/06995), selective amplification of target polynucleotide sequences (United States Patent No. 6,410,276), consensus sequence primed polymerase chain reaction (CP-PCR) (United States Patent No. 4,437,975), arbitrarily primed polymerase chain reaction (AP-PCR) (United States Patent Nos. 5,413,909, 5,861,245) and nucleic acid based sequence amplification (NABSA). (*See,* United States Patents Nos. 5,409,818, 5,554,517, and 6,063,603. Other amplification methods that may be used are descnbed in, United States Patent Nos. 5,242,794, 5,494,810, 4,988,617 and in United States Serial No. 09/854,317.

Additional methods of sample preparation and techniques for reducing the complexity of a nucleic sample are described in Dong et al., Genome Research 11, 1418 (2001), in United States Patent No. 6,361,947, 6,391,592 and United States Patent Application Nos. 09/916,135,09/920,491,09/910,292, and 10/013,598.

Methods for conducting polynucleotide hybridization assays have been well developed in the art. Hybridization assay procedures and conditions will vary depending on the application and are selected in accordance with the general binding methods known including those referred to in: Maniatis et al. Molecular Cloning: A Laboratory Manual (2nd Ed. Cold Spring Harbor, N.Y,1989); Berger and Kimmel Methods in Enzymology, Vol. 152, Guide to Molecular Cloning Techniques (Academic Press, Inc., San Diego, CA, 1987); Young and Davism, P.N.A.S, 80: 1194 (1983). Methods and apparatus for carrying out repeated and controlled hybridization reactions have been described in US patent 5,871,928, 5,874,219, 6,045,996 and 6,386,749, 6,391,623.

The present invention also contemplates signal detection of hybridization between ligands in certain preferred embodiments. See United States Patent Nos. 5,143,854, 5,578,832; 5,631,734; 5,834,758; 5,936,324; 5,981,956; 6,025,601; 6,141,096; 6,185,030; 6,201,639; 6,218,803; and 6,225,625, in United States Patent Application 60/364,731 and in PCT Application PCT/US99/06097 (published as WO99/47964).

Methods and apparatus for signal detection and processing of intensity data are disclosed in, for example, United Patent Nos. 5,143,854, 5,547,839, 5,578,832, 5,631,734, 5,800,992, 5,834,758; 5,856,092, 5,902,723, 5,936,324, 5,981,956, 6,025,601, 6,090,555, 6,141,096, 6,185,030, 6,201,639; 6,218,803; and 6,225,625, in United States Patent Application 60/364,731 and in PCT Application PCT/US99/06097 (published as WO99/47964).

The practice of the present invention may also employ conventional biology methods, software and systems. Computer software products of the invention typically include computer readable medium having computer-executable instructions for performing the logic steps of the method of the invention. Suitable computer readable medium include floppy disk, CD-ROM/DVD/DVD-ROM, hard-disk drive, flash memory, ROM/RAM, magnetic tapes and etc. The computer executable instructions may be written in a suitable computer language or combination of several languages. Basic computational biology methods are described in, e.g. Setubal and Meidanis et al., Introduction to Computational Biology Methods (PWS Publishing Company, Boston, 1997); Salzberg, Searles, Kasif, (Ed.), Computational Methods in Molecular Biology, (Elsevier, Amsterdam, 1998); Rashidi and Buehler, Bioinformatics Basics: Application in Biological Science and Medicine (CRC Press, London, 2000) and Ouelette and Bzevanis Bioinformatics: A Practical Guide for Analysis of Gene and Proteins (Wiley & Sons, Inc., 2nd ed., 2001). See United States Patent 6,420,108.

The present invention may also make use of various computer program products and software for a variety of purposes, such as probe design, management of data, analysis, and instrument operation. See, United States Patent Nos. 5,593,839, 5,795,716, 5,733,729, 5,974,164, 6,066,454, 6,090,555, 6,185,561, 6,188,783, 6,223,127,6,229,911 and 6,308,170.

The present invention may also make use of the several embodiments of the array or arrays and the processing described in United States Patent Nos. 5,545,531 and 5,874,219.

Additionally, the present invention may have preferred embodiments that include methods for providing genetic information over networks such as the Internet as shown in United States Patent applications 10/063,559, 60/349,546, 60/376,003, 60/394,574, 60/403,381.

### Definitions

An "array" is an intentionally created collection of molecules which can be prepared either synthetically or biosynthetically. The molecules in the array can be identical or different from each other. The array can assume a variety of formats, *e.g.*, libraries of soluble molecules; libraries of compounds tethered to resin beads, silica chips, or other solid supports.

Array Plate or a Plate is a body having a plurality of arrays in which each array is separated from the other arrays by a physical barrier resistant to the passage of liquids and forming an area or space, referred to as a well.

Nucleic acid library or array is an intentionally created collection of nucleic acids which can be prepared either synthetically or biosynthetically and screened for biological activity in a variety of different formats (e.g., libraries of soluble molecules; and libraries of oligos tethered to resin beads, silica chips, or other solid supports). Additionally, the term "array" is meant to include those libraries of nucleic acids which can be prepared by spotting nucleic acids of essentially any length (e.g., from 1 to about 1000 nucleotide monomers in length) onto a substrate. The term "nucleic acid" as used herein refers to a polymeric form of nucleotides of any length, either ribonucleotides, deoxyribonucleotides or peptide nucleic acids (PNAs) as described in United States Patent No. 6,156,501 that comprise purine and pyrimidine bases, or other natural, chemically or biochemically modified, non-natural, or derivatized nucleotide bases. The backbone of the polynucleotide can comprise sugars and phosphate groups, as may typically be found in RNA or DNA, or modified or substituted sugar or phosphate groups. A polynucleotide may comprise modified nucleotides, such as methylated nucleotides and nucleotide analogs. The sequence of nucleotides may be interrupted by non-nucleotide components. Thus the terms nucleoside, nucleotide, deoxynucleoside and deoxynucleotide generally include analogs such as those described herein. These analogs are those molecules having some structural features in common with a naturally occurring nucleoside or nucleotide such that when incorporated into a nucleic acid or oligonucleoside sequence, they allow hybridization with a naturally occurring nucleic acid sequence in solution. Typically, these analogs are derived from naturally occurring nucleosides and nucleotides by replacing and/or modifying the base, the ribose or the phosphodiester moiety. The changes can be tailor made to stabilize or destabilize hybrid formation or enhance the specificity of hybridization with a complementary nucleic acid sequence as desired.

Biopolymer or biological polymer is intended to mean repeating units of biological or chemical moieties. Representative biopolymers include, but are not limited to, nucleic acids, oligonucleotides, amino acids, proteins, peptides, hormones, oligosaccharides, lipids, glycolipids, lipopolysaccharides, phospholipids, synthetic analogues of the foregoing, including, but not limited to, inverted nucleotides, peptide nucleic acids, Meta-DNA, and combinations of the above. "Biopolymer synthesis" is intended to encompass the synthetic production, both organic and inorganic, of a biopolymer.

Related to a bioploymer is a "biomonomer" which is intended to mean a single unit of biopolymer, or a single unit which is not part of a biopolymer. Thus, for example, a nucleotide is a biomonomer within an oligonucleotide biopolymer, and an amino acid is a biomonomer within a protein or peptide biopolymer; avidin, biotin, antibodies, antibody fragments, etc., for example, are also biomonomers.

Initiation Biomonomer or "initiator biomonomer" is meant to indicate the first biomonomer which is covalently attached via reactive nucleophiles to the surface of the polymer, or the first biomonomer which is attached to a linker or spacer arm attached to the polymer, the linker or spacer arm being attached to the polymer via reactive nucleophiles.

Clamping plate refers to a device used for fastening two or more parts.

Complementary refers to the hybridization or base pairing between nucleotides or nucleic acids, such as, for instance, between the two strands of a double stranded DNA molecule or between an oligonucleotide primer and a primer binding site on a single stranded nucleic acid to be sequenced or amplified. Complementary nucleotides are, generally, A and T (or A and U), or C and G. Two single stranded RNA or DNA molecules are said to be substantially complementary when the nucleotides of one strand, optimally aligned and compared and with appropriate nucleotide insertions or deletions, pair with at least about 80% of the nucleotides of the other strand, usually at least about 90% to 95%, and more preferably from about 98 to 100%. Alternatively, substantial complementary exists when an RNA or DNA strand will hybridize under selective hybridization conditions to its complement. Typically, selective hybridization will occur when there is at least about 65% complementary over a stretch of at least 14 to 25 nucleotides, preferably at least about 75%, more preferably at least about 90% complementary. S. ee, M. Kanehisa Nucleic Acids Res. 12:203 (1984).

Combinatorial Synthesis Strategy is an ordered strategy for parallel synthesis of diverse polymer sequences by sequential addition of reagents which may be represented by a reactant matrix and a switch matrix, the product of which is a product matrix. A reactant matrix is a 1 column by m row matrix of the building blocks to be added. The switch matrix is all or a subset of the binary numbers, preferably ordered, between I and m arranged in columns. A "binary strategy" is one in which at least two successive steps illuminate a portion, often half, of a region of interest on the substrate. In a binary synthesis strategy, all possible compounds which can be formed from an ordered set of reactants are formed. In most preferred embodiments, binary synthesis refers to a synthesis strategy which also factors a previous addition step. For example, a strategy in which a switch matrix for a masking strategy halves regions that were previously illuminated, illuminating about half of the previously illuminated region and protecting the remaining half (while also protecting about half of previously protected regions and illuminating about half of previously protected regions). It will be recognized that binary rounds may be interspersed with non-binary rounds and that only a portion of a substrate may be subjected to a binary scheme. A combinatorial "masking" strategy is a synthesis which uses light or other spatially selective deprotecting or activating agents to remove protecting groups from materials for addition of other materials such as amino acids.

Effective amount refers to an amount sufficient to induce a desired result.

Excitation energy refers to energy used to energize a detectable label for detection, for example illuminating a fluorescent label. Devices for this use include coherent light or non coherent light, such as lasers, UV light, light emitting diodes, an incandescent light source, or any other light or other electromagnetic source of energy having a wavelength in the excitation band of an excitable label, or capable of providing detectable transmitted, reflective, or diffused radiation.

Gaskets or o-ring refer to any of a wide variety of seals or packings used between joined parts to prevent the escape of a gas or fluid. Gaskets or o-rings can be made of materials such as elastomer.

Genome is all the genetic material in the chromosomes of an organism. DNA derived from the genetic material in the chromosomes of a particular organism is genomic DNA. A genomic library is a collection of clones made from a set of randomly generated overlapping DNA fragments representing the entire genome of an organism.

Hybridization conditions will typically include salt concentrations of less than about 1M, more usually less than about 500 mM and preferably less than about 200 mM. Hybridization temperatures can be as low as 5°C., but are typically greater than 22°C., more typically greater than about 30°C., and preferably in excess of about 37° C. Longer fragments may require higher hybridization temperatures for specific hybridization. As other factors may affect the stringency of hybridization, including base composition and length of the complementary strands, presence of organic solvents and extent of base mismatching, the combination of parameters is more important than the absolute measure of any one alone.

Hybridizations, e.g., allele-specific probe hybridizations, are generally performed under stringent conditions. For example, conditions where the salt concentration is no more than about 1 Molar (M) and a temperature of at least 25 degrees-Celcius ( C), e.g., 750 mM NaCl, 50 mM NaPhosphate, 5 mM EDTA, pH 7.4 (5X SSPE)and a temperature of from about 25 to about 30 C.

Hybridizations are usually performed under stringent conditions, for example, at a salt concentration of no more than 1 M and a temperature of at least 25 °C. For example, conditions of 5X SSPE (750 mM NaCl, 50 mM NaPhosphate, 5 mM EDTA, pH 7.4) and a temperature of 25-30 C are suitable for allele-specific probe hybridizations. For stringent conditions, see, for example, Sambrook, Fritsche and Maniatis. "Molecular Cloning A laboratory Manual" 2nd Ed. Cold Spring Harbor Press (1989).

The term "hybridization" refers to the process in which two single-stranded polynucleotides bind non-covalently to form a stable double-stranded polynucleotide; triple-stranded hybridization is also theoretically possible. The resulting (usually) double-stranded polynucleotide is a "hybrid." The proportion of the population of polynucleotides that forms stable hybrids is referred to herein as the "degree of hybridization."

Hybridization probes are oligonucleotides capable of binding in a base-specific manner to a complementary strand of nucleic acid. Such probes include peptide nucleic acids, as described in Nielsen et al., Science 254, 1497-1500 (1991), and other nucleic acid analogs and nucleic acid mimetics. See US Patent No. 6,156,501.

"Hybridizing specifically to" refers to the binding, duplexing, or hybridizing of a molecule substantially to or only to a particular nucleotide sequence or sequences under stringent conditions when that sequence is present in a complex mixture (*e.g.*, total cellular) DNA or RNA.

Isolated nucleic acid is an object species invention that is the predominant species present (*i.e.,* on a molar basis it is more abundant than any other individual species in the composition). Preferably, an isolated nucleic acid comprises at least about 50, 80 or 90% (on a molar basis) of all macromolecular species present. Most preferably, the object species is purified to essential homogeneity (contaminant species cannot be detected in the composition by conventional detection methods).

A Label is, for example, a luminescent label, a light scattering label or a radioactive label. Fluorescent labels include, *inter alia,* the commercially available fluorescein phosphoramidites such as Fluoreprime (Pharmacia), Fluoredite (Millipore) and FAM (ABI). See United States Patent 6,287,778.

Ligand is a molecule that is recognized by a particular receptor. The agent bound by or reacting with a receptor is called a "ligand," a term which is definitionally meaningful only in terms of its counterpart receptor. The term "ligand" does not imply any particular molecular size or other structural or compositional feature other than that the substance in question is capable of binding or otherwise interacting with the receptor. Also, a ligand may serve either as the natural ligand to which the receptor binds, or as a functional analogue that may act as an agonist or antagonist. Examples of ligands that can be investigated by this invention include, but are not restricted to, agonists and antagonists for cell membrane receptors, toxins and venoms, viral epitopes, hormones (e.g., opiates, steroids, etc.), hormone receptors, peptides, enzymes, enzyme substrates, substrate analogs, transition state analogs, cofactors, drugs, proteins, and antibodies.

Linkage disequilibrium or allelic association means the preferential association of a particular allele or genetic marker with a specific allele, or genetic marker at a nearby chromosomal location more frequently than expected by chance for any particular allele frequency in the population. For example, if locus X has alleles a and b, which occur equally frequently, and linked locus Y has alleles c and d, which occur equally frequently, one would expect the combination ac to occur with a frequency of 0.25. If ac occurs more frequently, then alleles a and c are in linkage disequilibrium. Linkage disequilibrium may result from natural selection of certain combination of alleles or because an allele has been introduced into a population too recently to have reached equilibrium with linked alleles.

Microtiter plates are arrays of discrete wells that come in standard formats (96, 384 and 1536 wells) which are used for examination of the physical, chemical or biological characteristics of a quantity of samples in parallel.

Mixed population or complex population refers to any sample containing both desired and undesired nucleic acids. As a non-limiting example, a complex population of nucleic acids may be total genomic DNA, total genomic RNA or a combination thereof. Moreover, a complex population of nucleic acids may have been enriched for a given population but include other undesirable populations. For example, a complex population of nucleic acids may be a sample which has been enriched for desired messenger RNA (mRNA) sequences but still includes some undesired ribosomal RNA sequences (rRNA).

Monomer refers to any member of the set of molecules that can be joined together to form an oligomer or polymer. The set of monomers useful in the present invention includes, but is not restricted to, for the example of (poly)peptide synthesis, the set of L-amino acids, D-amino acids, or synthetic amino acids. As used herein, "monomer" refers to any member of a basis set for synthesis of an oligomer. For example, dimers of L-amino acids form a basis set of 400 "monomers" for synthesis of polypeptides. Different basis sets of monomers may be used at successive steps in the synthesis of a polymer. The term "monomer" also refers to a chemical subunit that can be combined with a different chemical subunit to form a compound larger than either subunit alone.

mRNA or mRNA transcripts as used herein include, but not limited to pre-mRNA transcript(s), transcript processing intermediates, mature mRNA(s) ready for translation and transcripts of the gene or genes, or nucleic acids derived from the mRNA transcript(s). Transcript processing may include splicing, editing and degradation. As used herein, a nucleic acid derived from an mRNA transcript refers to a nucleic acid for whose synthesis the mRNA transcript or a subsequence thereof has ultimately served as a template. Thus, a cDNA reverse transcribed from an mRNA, an RNA transcribed from that cDNA, a DNA amplified from the cDNA, an RNA transcribed from the amplified DNA, *etc*., are all derived from the mRNA transcript and detection of such derived products is indicative of the presence and/or abundance of the original transcript in a sample. Thus, mRNA derived samples include, but are not limited to, mRNA transcripts of the gene or genes, cDNA reverse transcribed from the mRNA, cRNA transcribed from the cDNA, DNA amplified from the genes, RNA transcribed from amplified DNA, and the like.

Nucleic acid library or array is an intentionally created collection of nucleic acids which can be prepared either synthetically or biosynthetically and screened for biological activity in a variety of different formats (e.g., libraries of soluble molecules; and libraries of oligos tethered to resin beads, silica chips, or other solid supports). Additionally, the term "array" is meant to include those libraries of nucleic acids which can be prepared by spotting nucleic acids of essentially any length (e.g., from 1 to about 1000 nucleotide monomers in length) onto a substrate. The term "nucleic acid" as used herein refers to a polymeric form of nucleotides of any length, either ribonucleotides, deoxyribonucleotides or peptide nucleic acids (PNAs), that comprise purine and pyrimidine bases, or other natural, chemically or biochemically modified, non-natural, or derivatized nucleotide bases. The backbone of the polynucleotide can comprise sugars and phosphate groups, as may typically be found in RNA or DNA, or modified or substituted sugar or phosphate groups. A polynucleotide may comprise modified nucleotides, such as methylated nucleotides and nucleotide analogs. The sequence of nucleotides may be interrupted by non-nucleotide components. Thus the terms nucleoside, nucleotide, deoxynucleoside and deoxynucleotide generally include analogs such as those described herein. These analogs are those molecules having some structural features in common with a naturally occurring nucleoside or nucleotide such that when incorporated into a nucleic acid or oligonucleoside sequence, they allow hybridization with a naturally occurring nucleic acid sequence in solution. Typically, these analogs are derived from naturally occurring nucleosides and nucleotides by replacing and/or modifying the base, the ribose or the phosphodiester moiety. The changes can be tailor made to stabilize or destabilize hybrid formation or enhance the specificity of hybridization with a complementary nucleic acid sequence as desired.

Nucleic acids according to the present invention may include any polymer or oligomer of pyrimidine and purine bases, preferably cytosine, thymine, and uracil, and adenine and guanine, respectively. See Albert L. Lehninger, PRINCIPLES OF BIOCHEMISTRY, at 793-800 (Worth Pub. 1982). Indeed, the present invention contemplates any deoxyribonucleotide, ribonucleotide or peptide nucleic acid component, and any chemical variants thereof, such as methylated, hydroxymethylated or glucosylated forms of these bases, and the like. The polymers or oligomers may be heterogeneous or homogeneous in composition, and may be isolated from naturally-occurring sources or may be artificially or synthetically produced. In addition, the nucleic acids may be DNA or RNA, or a mixture thereof, and may exist permanently or transitionally in single-stranded or double-stranded form, including homoduplex, heteroduplex, and hybrid states.

An "oligonucleotide" or "polynucleotide" is a nucleic acid ranging from at least 2, preferable at least 8, and more preferably at least 20 nucleotides in length or a compound that specifically hybridizes to a polynucleotide. Polynucleotides of the present invention include sequences of deoxyribonucleic acid (DNA) or ribonucleic acid (RNA) which may be isolated from natural sources, recombinantly produced or artificially synthesized and mimetics thereof. A further example of a polynucleotide of the present invention may be peptide nucleic acid (PNA). The invention also encompasses situations in which there is a nontraditional base pairing such as Hoogsteen base pairing which has been identified in certain tRNA molecules and postulated to exist in a triple helix. "Polynucleotide" and "oligonucleotide" are used interchangeably in this application.

Probe is a surface-immobilized molecule that can be recognized by a particular target. Examples of probes that can be investigated by this invention include, but are not restricted to, agonists and antagonists for cell membrane receptors, toxins and venoms, viral epitopes, hormones (e.g., opioid peptides, steroids, etc.), hormone receptors, peptides, enzymes, enzyme substrates, cofactors, drugs, lectins, sugars, oligonucleotides, nucleic acids, oligosaccharides, proteins, and monoclonal antibodies.

Primer is a single-stranded oligonucleotide capable of acting as a point of initiation for template-directed DNA synthesis under suitable conditions e.g., buffer and temperature, in the presence of four different nucleoside triphosphates and an agent for polymerization, such as, for example, DNA or RNA polymerase or reverse transcriptase. The length of the primer, in any given case, depends on, for example, the intended use of the primer, and generally ranges from 15 to 20, 25, 30 nucleotides. Short primer molecules generally require cooler temperatures to form sufficiently stable hybrid complexes with the template. A primer need not reflect the exact sequence of the template but must be sufficiently complementary to hybridize with such template. The primer site is the area of the template to which a primer hybridizes. The primer pair is a set of primers including a 5' upstream primer that hybridizes with the 5' end of the sequence to be amplified and a 3' downstream primer that hybridizes with the complement of the 3' end of the sequence to be amplified.

Polymorphism refers to the occurrence of two or more genetically determined alternative sequences or alleles in a population. A polymorphic marker or site is the locus at which divergence occurs. Preferred markers have at least two alleles, each occurring at frequency of greater than 1%, and more preferably greater than 10% or 20% of a selected population. A polymorphism may comprise one or more base changes, an insertion, a repeat, or a deletion. A polymorphic locus may be as small as one base pair. Polymorphic markers include restriction fragment length polymorphisms, variable number of tandem repeats (VNTR's), hypervariable regions, minisatellites, dinucleotide repeats, trinucleotide repeats, tetranucleotide repeats, simple sequence repeats, and insertion elements such as Alu. The first identified allelic form is arbitrarily designated as the reference form and other allelic forms are designated as alternative 6r variant alleles. The allelic form occurring most frequently in a selected population is sometimes referred to as the wildtype form. Diploid organisms may be homozygous or heterozygous for allelic forms. A diallelic polymorphism has two forms. A triallelic polymorphism has three forms. Single nucleotide polymorphisms (SNPs) are included in polymorphisms.

Reader or plate reader is a device which is used to identify hybridization events on an array, such as the hybridization between a nucleic acid probe on the array and a fluorescently labeled target. Readers are known in the art and are commercially available through Affymetrix, Santa Clara CA and other companies. Generally, they involve the use of an excitation energy (such as a laser) to illuminate a fluorescently labeled target nucleic acid that has hybridized to the probe. Then, the reemitted radiation (at a different wavelength than the excitation energy) is detected using devices such as a CCD, PMT, photodiode, or similar devices to register the collected emissions. See United States Patent No. 6,225,625.

Receptor is a molecule that has an affinity for a given ligand. Receptors may be naturally-occurring or manmade molecules. Also, they can be employed in their unaltered state or as aggregates with other species. Receptors may be attached, covalently or noncovalently, to a binding member, either directly or via a specific binding substance. Examples of receptors which can be employed by this invention include, but are not restricted to, antibodies, cell membrane receptors, monoclonal antibodies and antisera reactive with specific antigenic determinants (such as on viruses, cells or other materials), drugs, polynucleotides, nucleic acids, peptides, cofactors, lectins, sugars, polysaccharides, cells, cellular membranes, and organelles. Receptors are sometimes referred to in the art as anti-ligands. As the term receptors is used herein, no difference in meaning is intended. A "Ligand Receptor Pair" is formed when two macromolecules have combined through molecular recognition to form a complex. Other examples of receptors which can be investigated by this invention include but are not restricted to those molecules shown in United States Patent No. 5,143,854.

"Solid support", "support", and "substrate" are used interchangeably and refer to a material or group of materials having a rigid or semi-rigid surface or surfaces. In many embodiments, at least one surface of the solid support will be substantially flat, although in some embodiments it may be desirable to physically separate synthesis regions for different compounds with, for example, wells, raised regions, pins, etched trenches, or the like. According to other embodiments, the solid support(s) will take the form of beads, resins, gels, microspheres, or other geometric configurations. See U.S. Patent No. 5,744,305 for exemplary substrates.

Target is a molecule that has an affinity for a given probe. Targets may be naturally-occurring or man-made molecules. Also, they can be employed in their unaltered state or as aggregates with other species. Targets may be attached, covalently or noncovalently, to a binding member, either directly or via a specific binding substance. Examples of targets which can be employed by this invention include, but are not restricted to, antibodies, cell membrane receptors, monoclonal antibodies and antisera reactive with specific antigenic determinants (such as on viruses, cells or other materials), drugs, oligonucleotides, nucleic acids, peptides, cofactors, lectins, sugars, polysaccharides, cells, cellular membranes, and organelles. Targets are sometimes referred to in the art as anti-probes. As the term targets is used herein, no difference in meaning is intended. A "Probe Target Pair" is formed when two macromolecules have combined through molecular recognition to form a complex.

Wafer is a substrate having surface to which a plurality of arrays are bound. In a preferred embodiment, the arrays are synthesized on the surface of the substrate to create multiple arrays that are physically separate. In one preferred embodiment of a wafer, the arrays are physically separated by a distance of at least about 0.1, 0.25, 0.5, 1 or 1.5 millimeters. The arrays that are on the wafer may be identical, each one may be different, or there may be some combination thereof. Particularly preferred wafers are about 8" x 8" and are made using the photolithographic process.

### GENERAL

This invention provides array plates useful in automated methods for concurrently processing multiple array assays. (i.e. See United States Patent No. 5,545,531).

In some preferred methods of this invention, a plate is provided having a plurality of wells. Each well may include one or more arrays. Test samples, which may contain target molecules, are introduced into the wells. A fluid handling device exposes the wells to a chosen set of reaction conditions by, for example, adding or removing fluid from the wells, maintaining the liquid in the wells at predetermined temperatures, and agitating the wells as required, thereby performing the test. Then, an array reader interrogates the probe arrays in the wells, thereby obtaining the results of the tests. A computer having an appropriate program can further analyze the results from the tests.

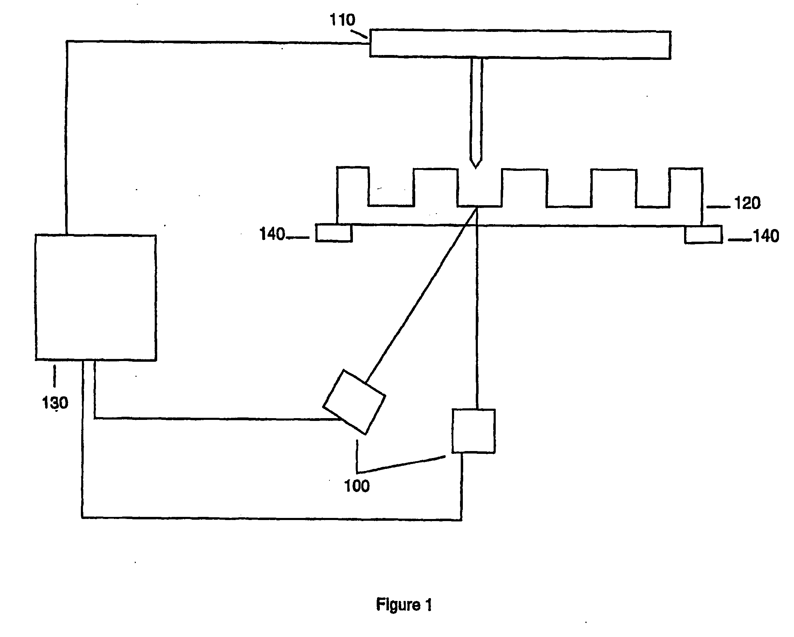

Referring to Fig. 1, a system for concurrently processing array assays is shown. The system includes a plate reader 100, a fluid handling device 110, a plate 120 and, optionally, a computer 130. In operation, samples are placed in wells on the array plate 120 with fluid handling device 110. The plate optionally can be moved with a stage translation device 140. It should be understood that other devices may be employed to translate the plate relative to the reader. Reader 100 is used to identify where targets in the wells have bound to complementary probes. The system operates under control of computer 130 which may optionally interpret the results of the assay. See United States Patent Nos. 6,225,625 and 5,835,758.

### A. Reader

In assays performed on arrays, detectably labeled target molecules bind to probe molecules. Reading the results of an assay involves detecting a signal produced by the detectable label. Reading assays on an array plate requires a reader. Accordingly, locations at which target(s) bind with complementary probes can be identified by detecting the location of the label. Through knowledge of the characteristics/sequence of the probe versus location, characteristics of the target can be determined. The nature of the array reader depends upon the particular type of label attached to the target molecules. See United States Patent Nos. 6,225,625; 6,040,138; 6,309,822; and 6,495,320.

The interaction between targets and probes can be characterized in terms of kinetics and thermodynamics. As such, it may be necessary to interrogate the array while in contact with a solution of labeled targets. In such systems, the detection system must be extremely selective, with the capacity to discriminate between surface-bound and solution-born targets. Also, in order to perform a quantitative analysis, the high-density of the probe sequences requires the system to have the capacity to distinguish between each feature site. The system also should have sensitivity to low signal and a large dynamic range.

The reader includes a confocal detection device having a monochromatic or polychromatic light source, a focusing system for directing an excitation light from the light source to the substrate, a temperature controller for controlling the substrate temperature during a reaction, and a detector for detecting fluorescence emitted by the targets in response to the excitation light The detector for detecting the fluorescent emissions from the substrate, in some embodiments, includes a photomultiplier tube. The location to which light is directed may be controlled by, for example, an x-y-z translation table. Translation of the x-y-z table, temperature control, and data collection are managed and recorded by an appropriately programmed digital computer.

Further details for methods of detecting fluorescently labeled materials on arrays are provided in United States Patent Nos. 5,631,734; 6,225,625; and 5,835,758.

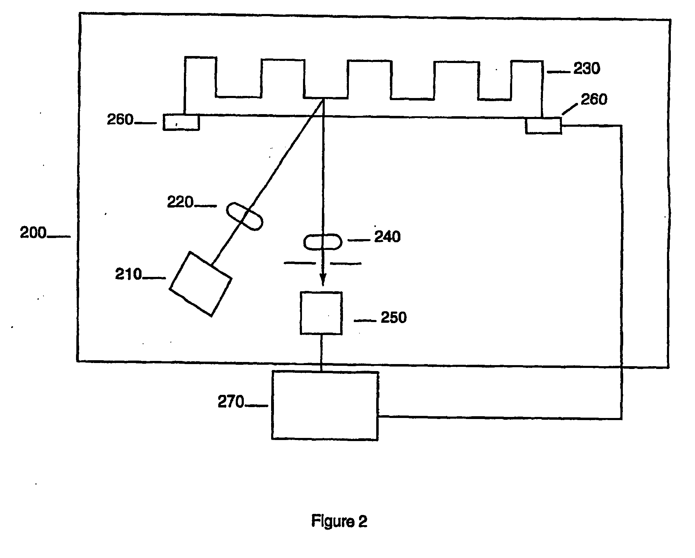

Fig. 2 illustrates a reader according to one specific embodiment. The reader comprises a body 200 for immobilizing the array plate. Excitation radiation, from an excitation source 210 having a first wavelength, passes through excitation optics 220 from preferably below the array. However, other directions may be employed. The light passes through the array plate since it is transparent to at least this wavelength of light The excitation radiation excites a region of a probe array on the array plate 230. In response, labeled material on the sample emits radiation which has a wavelength that is different from the excitation wavelength. Collection optics 240, preferably also below the array (but may be located in another position), then collect the emission from the sample and image it onto a detector 250, which can house a CCD array, as described below. Alternate photo-detection devices can be used. The detector generates a signal proportional to the amount of radiation sensed thereon. The signals can be assembled to represent an image associated with the plurality of regions from which the emission originated.

A multi-axis translation stage 260 moves the array plate to position different wells to be scanned, and to allow different probe portions of a probe array to be interrogated. As a result, a 2-dimensional image of the probe arrays in each well is obtained. It should also be understood that relative translation between the detector, optics or excitation energy source, for example is possible.

The reader can include auto-focusing feature to maintain the sample in the focal plane of the excitation light throughout the scanning process. Further, a temperature controller may be employed to maintain the sample at a specific temperature while it is being scanned. The multi-axis translation stage, temperature controller, auto-focusing feature, and electronics associated with imaging and data collection are managed by an appropriately programmed digital computer 270.

### B. Fluid Handling Instruments and Assay Automation

Arrays generally include contacting an array with a sample under the selected reaction conditions, optionally washing the well to remove unreacted molecules, and analyzing the array for evidence of reaction between target molecules the probes. See United States Patent No. 6,495,320. These steps involve handling fluids. The methods of this invention automate these steps so as to allow multiple assays to be performed concurrently. Accordingly, this invention employs automated fluid handling systems for concurrently performing the assay steps in each of the wells. Fluid handling allows uniform treatment of samples in the wells. Microtiter robotic and fluid-handling devices are available commercially, for example, from Tecan AG.

The plate is introduced into a holder in the fluid-handling device. This robotic device is programmed to set appropriate reaction conditions, such as temperature, add samples to the wells, incubate the test samples for an appropriate time, remove unreacted samples, wash the wells, add substrates as appropriate and perform detection assays. The particulars of the reaction conditions depends upon the purpose of the assay. For example, in a sequencing assay involving DNA hybridization, standard hybridization conditions are chosen. However, the assay may involve testing whether a sample contains target molecules that react to a probe under a specified set of reaction conditions. In this case, the reaction conditions are chosen accordingly.

### C. Array Plates

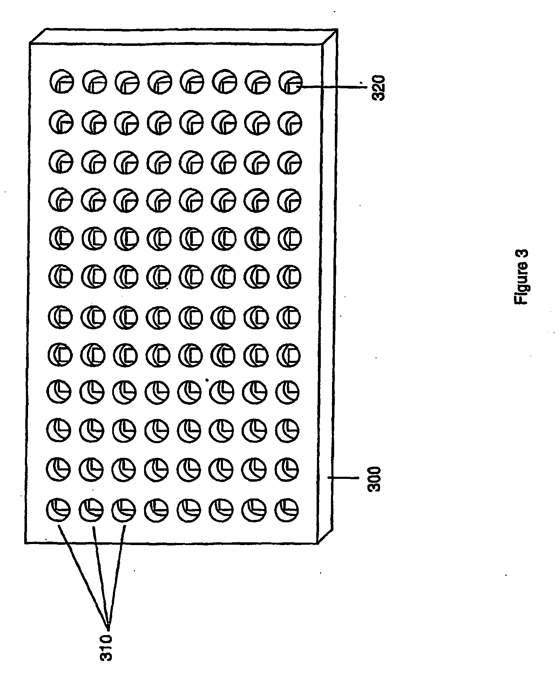

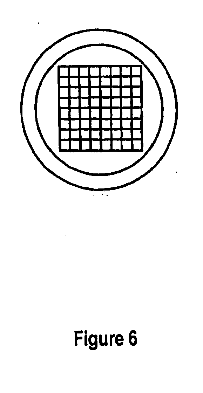

Fig. 3 depicts an example of an array plate 300 based on the standard 96-well microtiter plate in which the arrays are located at the bottom of the wells. Array plates include a plurality of wells 310, each well defining an area or space for the introduction of a sample, and each well comprising an array 320, i.e., a substrate and a surface to which an array of probes is attached, the probes being exposed to the interior of the cavity. Fig. 6 shows a top-down view of a well of an array plate of this invention containing an array on the bottom surface of the well.

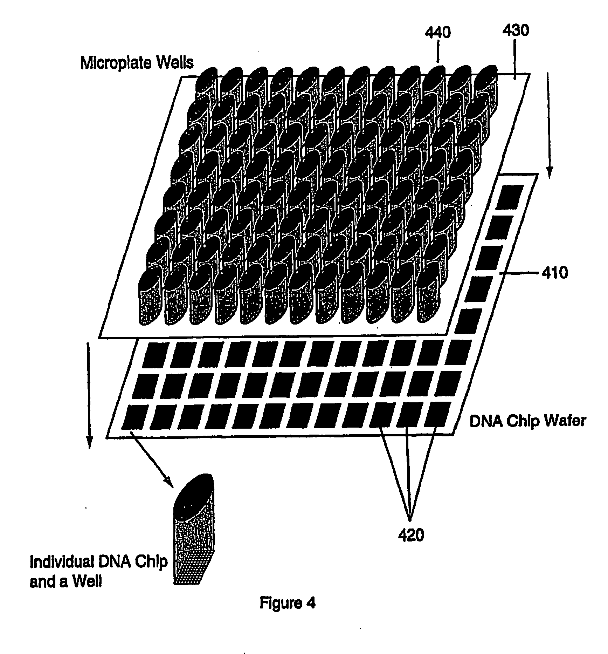

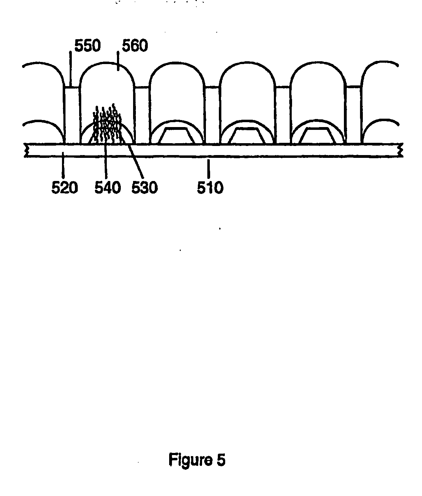

This invention contemplates a number of embodiments of the array plate. In a preferred embodiment, depicted in Fig. 4, the array plate includes two parts. One part is a wafer 410 that includes a plurality of arrays 420. The other part is the body 430 of the array plate that contains channels 440 that form the well, but that are open at both ends until the array plate is attached. The body is attached to the surface of the wafer so as to close one end of the channels, thereby creating wells. The walls of the channels are placed on the wafer so that each surrounds and encloses an array. Fig. 5 depicts a cross-section of this embodiment, showing the wafer 510 having a substrate 520 (preferably transparent to light) and a surface 530 to which is attached an array of probes 540. A cavity encloses an array on the wafer, thereby creating wells 560. The wafer can be attached to the body by gluting, i.e. by applying adhesive in a recess (not shown) of the body, or by means of a clamping plate (not shown).

In another embodiment, the array plate has a wafer having a plurality of probe arrays and a material resistant to the flow of a liquid sample that surrounds each probe array. For example, in an embodiment useful for testing aqueous-based samples, the wafer can be scored with waxes, tapes or other hydrophobic materials in the spaces between the arrays, forming cells that act as wells. The cells thus contain liquid applied to an array by resisting spillage over the barrier and into another cell. If the sample contains a non-aqueous solvent, such as an alcohol, the material is selected to be resistant to corrosion by the solvent

The array plates of this invention have a plurality of wells that can be arrayed in a variety of ways. In one embodiment, the array plates have the general size and shape of standard-sized microtiter plates having 96 wells arranged in an 8 x 12 format One advantage of this format is that instrumentation already exists for handling and reading assays on microtiter plates. Therefore, using such plates in array assays does not involve extensive re-engineering of commercially available fluid handling devices. However, the array plates can have other formats as well.

The material from which the body of the array plate is made depends upon the use to which it is to be put In particular, this invention contemplates a variety of polymers already used for microtiter plates including, for example, (poly)tetrafluoroethylene (PTFE), (poly)vinylidenedifluoride (PVD), polypropylene, polystyrene, acrylonitrile butadiene-strene (ABS), Cyrolite G-20 Hi Flow (Acrylic Based Multipolymer Compound), or combinations thereof which are commercially available. When the assay is to be performed by sending an excitation beam through the bottom of the array plate collecting data through the bottom of the array plate, the body of the array plate and the substrate of the array should be transparent to the wavelengths of light being used.

The arrangement of probe arrays in the wells of a microplate depends on the particular application contemplated. For example, for diagnostic uses involving performing the same test on many samples, every well can have the same array of probes. If several different tests are to be performed on each sample, each row of the array plate can have the same array of probes and each column can contain a different array. Samples from a single patient are introduced into the wells of a particular column. Samples from a different patient are introduced into the wells of a different column. In still another embodiment, multiple patient samples are introduced into a single well. If a well indicates a "positive" result for a particular characteristic, the samples from each patient are then rerun, each in a different well, to determine which patient sample gave a positive result

### D. Arrays

The array of probe sequences can be fabricated on the array according to the pioneering techniques disclosed in United States Patent No. 5,143,854, 5,744,305, 5,968,740, or 5,571,639, incorporated herein by reference for all purposes. The combination of photolithographic and fabrication techniques may, for example, enable each probe sequence ("feature") to occupy a very small area ("site" or "location") on the support. In some embodiments, this feature site may be as small as a few microns or even a single molecule. For example, a probe array of 025 mm² (about the size that would fit in a well of a typical 96-well microtiter plate) could have at least 10, 100, 1000, ₁₀⁴,₁₀⁵ or ₁₀⁶ features. In an alternative embodiment, such synthesis is performed according to the mechanical techniques disclosed in United States Patent No. 5,384,261. Arrays can be made using alternative techniques including spotting. See United States Patent No. 6,040,193.

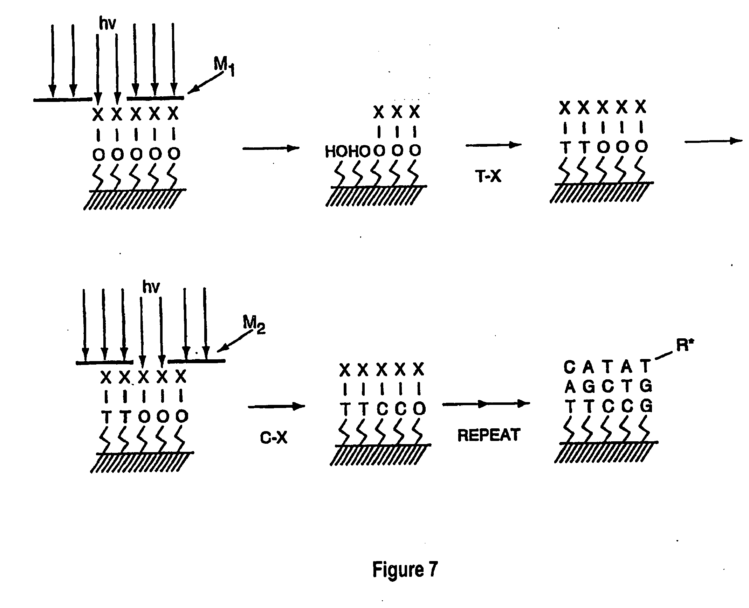

Referring to Fig. 7, in general, linker molecules, -O-X, are provided on a substrate. The substrate is preferably flat but may take on a variety of alternative surface configurations. For example, the substrate may contain raised or depressed regions on which the probes are located. The substrate and its surface preferably form a rigid support on which the sample can be formed. The substrate and its surface are also chosen to provide appropriate light-absorbing characteristics. For instance, the substrate may be functionalized glass, Si, Ge, GaAs, GaP, SiO₂, SiN₄, modified silicon, or any one of a wide variety of gels or polymers such as (poly)tetrafluoroethylene, (poly)vinylidenedifluoride, polystyrene, olycarbonate, polypropylene, or combinations thereof. Other substrate materials will be readily apparent to those of skill in the art upon review of this disclosure. In a preferred embodiment the substrate is flat glass or silica.

Surfaces on the solid substrate usually, though not always, are composed of the same material as the substrate. Thus, the surface may be composed of any of a wide variety of materials, for example, polymers, plastics, resins, polysaccharides, silica or silica-based materials, carbon, metals, inorganic glasses, membranes, or any of the above-listed substrate materials. In one embodiment, the surface will be optically transparent and will have surface Si-OH functionalities, such as those found on silica surfaces.

A terminal end of the linker molecules is provided with a reactive functional group protected with a photoremovable protective group, O-X Using lithographic methods, the photoremovable protective group is exposed to light, hv, through a mask, M₁, that exposes a selected portion of the surface, and removed from the linker molecules in first selected regions. The substrate is then washed or otherwise contacted with a first monomer that reacts with exposed functional groups on the linker molecules (∼T-X). In the case of nucleic acids, the monomer can be a phosphoramidite activated nucleoside protected at the 5'-hydroxyl with a photolabile protecting group. See United States Patent No. 5,959,098.

A second set of selected regions, thereafter, exposed to light through a mask, M₂, and photoremovable protective group on the linker molecule/protected amino acid or nucleotide is removed at the second set of regions. The substrate is then contacted with a second monomer containing a photoremovable protective group for reaction with exposed functional groups. This process is repeated to selectively apply monomers until polymers of a desired length and desired chemical sequence are obtained. Photolabile groups are then optionally removed and the sequence is, thereafter, optionally capped. Side chain protective groups, if present, are also removed.

The general process of synthesizing probes by removing protective groups by exposure to light, coupling monomer units to the exposed active sites, and capping unreacted sites is referred to herein as "light-directed probe synthesis." If the probe is an oligonucleotide, the process is referred to as "light-directed oligonucleotide synthesis" and so forth.

The probes can be made of any molecules whose synthesis involves sequential addition of units. This includes polymers composed of a series of attached units and molecules bearing a common skeleton to which various functional groups are added. Polymers useful as probes in this invention include, for example, both linear and cyclic polymers of nucleic acids, polysaccharides, phospholipids, and peptides having either α-, β-, or ω-amino acids, heteropolymers in which a known drug is covalently bound to any of the above, polyurethanes, polyesters, polycarbonates, polyureas, polyamides, polyethyleneimines, polyarylene sulfides, polysiloxanes, polyimides, polyacetates, or other polymers which will be apparent upon review of this disclosure. Molecules bearing a common skeleton include benzodiazepines and other small molecules, such as described in United States Patent No. 5,288,514 .

Preferably, probes are arrayed on an array in addressable rows and columns in which the dimensions of the array conform to the dimension of the array plate well. Technologies already have been developed to read information from such arrays. The amount of information that can be stored on each array plate depends on the lithographic density which is used to synthesize the wafer. For example, if each feature size is about 100 microns on a side, each array can have about 10,000 probe addresses in a 1 cm² area. An array plate having 96 wells would contain about 192,000 probes. However, if the arrays have a feature size of 20 microns on a side, each array can have close to 50,000 probes and the array plate would have over 4,800,000 probes.

The selection of probes and their organization in an array depends upon the use to which the array will be put In one embodiment, the arrays are used to sequence or re-sequence nucleic acid molecules, or compare their sequence to a referent molecule. Re-sequencing nucleic acid molecules involves determining whether a particular molecule has any deviations from the sequence of reference molecule. For example, in one embodiment, the array plates are used to identify in a particular type of HIV in a set of patient samples. Tiling strategies for sequence checking of nucleic acids are described in United States Patent Application 08/284,064 (PCT/US94/12305) (WO95/11995).

In typical diagnostic applications, a solution containing one or more targets to be identified (i.e., samples from patients) contacts the probe array. The targets will bind or hybridize with complementary probe sequences. Accordingly, the probes will be selected to have sequences directed to (i.e., having at least some complementarity with) the target sequences to be detected, e.g., human or pathogen sequences. Generally, the targets are tagged with a detectable label. The detectable label can be, for example, a luminescent label, a light scattering label or a radioactive label. Accordingly, locations at which targets hybridize with complimentary probes can be identified by locating the markers. Based on the locations where hybridization occurs, information regarding the target sequences can be extracted. The existence of a mutation may be determined by comparing the target sequence with the wild-type. See United States Patent No. 6,309,822.

In a preferred embodiment, the detectable label is a luminescent label. Useful luminescent labels include fluorescent labels, chemi-luminescent labels, bio-luminescent labels, and colorimetric labels, among others. Most preferably, the label is a fluorescent label such as fluorescein, rhodamine, digoxigenin, texas red, cyanine-3, cyanine-5 and so forth. Fluorescent labels include, *inter alia,* the commercially available fluorescein phosphoramidites such as Fluoreprime (Pharmacia), Fluoredite (Millipore) and FAM (ABI). For example, the entire surface of the substrate is exposed to the activated fluorescent phosphoramidite, which reacts with all of the deprotected 5'-hydroxyl groups. Then the entire substrate is exposed to an alkaline solution (eg., 50% ethylenediamine in ethanol for 1-2 hours at room temperature). This is necessary to remove the protecting groups from the fluorescein tag.

To avoid self-quenching interactions between fluorophores on the surface of an array, the fluorescent tag monomer should be diluted with a non-fluorescent analog of equivalent reactivity. For example, in the case of the fluorescein phosphoramidites noted above, a 1:20 dilution of the reagent with a non-fluorescent phosphoramidite such as the standard 5'-DMT-nucleoside phosphoramidites, has been found to be suitable. Correction for background non-specific binding of the fluorescent reagent and other such effects can be determined by routine testing.

Useful light scattering labels include large colloids, and especially the metal colloids such as those from gold, selenium and titanium oxide. See United States Patent No. 6,294,327.

Radioactive labels include, for example, ³²P. This label can be detected by a phosphoimager. Detection of course, depends on the resolution of the imager. Phosophoimagers are available having resolution of 50 microns. Accordingly, this label is currently useful with arrays having features of that size.

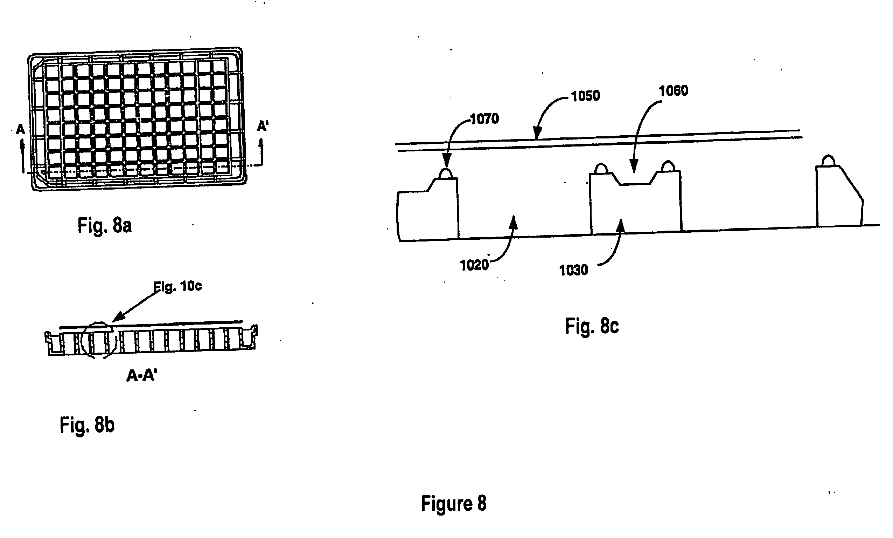

In a preferred embodiment of the invention depicted in Figs. 8A-8C; the array plate includes two parts. One part is a wafer 1050 that includes a plurality of arrays. The other part is the body of the plate 1040 that includes a plurality of grid-shaped cavities that form the walls 1030 of the wells 1020. Gaskets or o-rings 1070 could be placed on the walls at one surface of the body so as to prevent leakage of adhesive between the wells. The walls of the wells have a recess 1060 at one surface of the body to place adhesive for attaching the wafer to the body as to close one surface of the body, thereby creating wells. The walls of the cavities are placed on the wafer so that each surrounds and encloses an array.

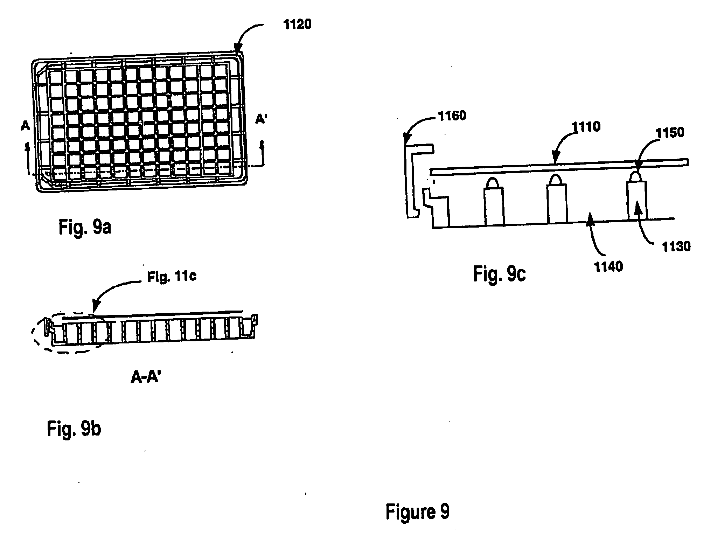

In a further embodiment of the invention depicted in Figs. 9A-9C, the array plate includes three parts. One part is a wafer 1110 that includes a plurality of arrays. The second part is the body of the plate 1120 that includes a plurality of grip-shaped cavities that form the walls 1130 of the wells 1140. Gaskets or o-rings 1150 are placed on the walls at one surface of the body so as to prevent leakage of adhesive between the wells. The other part is a clamping plate 1160 which is used to hold the wafer against the body as to close one surface of the body, thereby creating wells. The walls of the cavities are placed on the wafer so that each surrounds and encloses an array. The clamping plate is attached to the body outside the perimeter of the wafer. The clamping plate is attached to the body by any attachment means known in the art, for example adhesive, screws, ultrasonic welding, or snaps.

### E. Uses

The methods of this invention will find particular use wherever high through put of samples is required. In particular, this invention is useful in clinical settings and for sequencing large quantities of DNA, for example in connection with the Human Genome project.

The clinical setting requires performing the same test on many patient samples. The automated methods of this invention lend themselves to these uses when the test is one appropriately performed on an array. For example, a DNA array can determine the particular strain of a pathogenic organism based on characteristic DNA sequences of the strain. The advanced techniques based on these assays now can be introduced into the clinic. Fluid samples from several patients are introduced into the wells of an array plate and the assays are performed concurrently.

In some embodiments, it may be desirable to perform multiple tests on multiple patient samples concurrently. According to such embodiments, rows (or columns) of the microtiter plate will contain probe arrays for diagnosis of a particular disease or trait. For example, one row might contain probe arrays designed for a particular cancer, while other rows contain probe arrays for another cancer. Patient samples are then introduced into respective columns (or rows) of the microtiter plate. For example, one column may be used to introduce samples from patient "one," another column for patient "two" etc. Accordingly, multiple diagnostic tests may be performed on multiple patients in parallel. In still further embodiments, multiple patient samples are introduced into a single well. In a particular well indicator the presence of a genetic disease or other characteristic, each patient sample is then individually processed to identify which patient exhibits that disease or trait. For relatively rarely occurring characteristics, further order-of-magnitude efficiency may be obtained according to this embodiment.

Particular assays that will find use in automation include those designed specifically to detect or identify particular variants of a pathogenic organism, such as HIV. Assays to detect or identify a human or animal gene are also contemplated. In one embodiment, the assay is the detection of a human gene variant that indicates existence of or predisposition to a genetic disease, either from acquired or inherited mutations in an individual DNA. These include genetic diseases such as cystic fibrosis, diabetes, and muscular dystrophy, as well as diseases such as cancer (the P53 gene is relevant to some cancers), as disclosed in United States Patent Application Serial No. 08/143,312 (WO95/11995).

The present invention provides a substantially novel method for performing assays on arrays. While specific examples have been provided, the above description is illustrative and not restrictive. Many variations of the invention will become apparent to those of skill in the art upon review of this specification. The scope of the invention should, therefore, be determined not with reference to the above description, but instead should be determined with reference to the appended claims.

## Claims

1. A method for making an array plate comprising the steps of
a) providing a body comprising a plurality of cavities wherein each cavity is open at two ends and has a recess at one of the ends;
b) providing a wafer comprising a plurality of arrays on its surface;
c) applying adhesive in the recess of the body;
d) aligning the body over the wafer so that the cavities are placed on the wafer wherein the cavities surround and enclose an array; and
e) fixedly attaching the wafer to the body to define wells.

2. The method of claim 1 wherein gaskets or o-rings are mounted on the body at the end where the recess is located to prevent leakage between the wells.

3. An array plate comprising:
a) a wafer (1050) comprising a plurality of arrays on its surface;
b) a body (1040) comprising a plurality of cavities that form walls (1030) of wells (1020) onto the body wherein each cavity is open at two ends; and wherein each cavity (1040) has a recess (1060) in the wall (1030) at one of the ends;
c) said wafer fixedly connected to one end of the body by an adhesive wherein the adhesive is applied onto the recess of the wall.

4. The array plate of claim 3 wherein gaskets or o-rings are mounted on the body walls at the end of the body where the recess is located to prevent leakage between the wells.

5. A method for making an array plate comprising the steps of
a) providing a body comprising a plurality of cavities that form walls of wells onto the body wherein the body is open at two ends and wherein the body has gaskets or o-rings on the walls at one of the ends;
b) providing a wafer comprising a plurality of arrays on its surface;
c) providing a clamping plate;
d) aligning the wafer over the end of the body where the gaskets or o-rings are located so that the cavities are placed on the wafer wherein the cavities surround and enclose an array;
e) fixedly attaching the wafer to the body with the use of the clamping plate; and
f) fixedly attaching the clamping plate to the body outside the perimeter of the wafer.

6. An array plate comprising:
a) a wafer (1110) comprising a plurality of arrays on its surface;
b) a body (1120) comprising a plurality of cavities that form walls (1130) of wells (1140) onto the body wherein each cavity is open at two ends; and wherein the body has gaskets or o-rings (1150) on the walls (1130) at one of the ends;
c) a clamping plate (1160) ;
d) said wafer (1110) fixedly connected to that end of the body (1120) where the gaskets or o-rings (1150) are located with the use of the clamping plate (1160).

## Patentansprüche

1. Verfahren zum Herstellen einer Array-Platte, wobei bei dem Verfahren
a) ein Körper mit einer Vielzahl von Hohlräumen bereitgestellt wird, wobei jeder Hohlraum an zwei Enden offen ist und eine Aussparung an einem seiner Enden hat,
b) ein Wafer mit einer Mehrzahl von Arrays auf seiner Oberfläche bereitgestellt wird,
c) Klebstoff in die Aussparung in dem Körper aufgebracht wird,
d) der Körper über dem Wafer ausgerichtet wird, so dass die Hohlräume auf dem Wafer platziert werden, wobei die Hohlräume ein Array umgeben und einschließen, und
e) der Wafer fest an dem Körper angebracht wird, um Vertiefungen zu definieren.

2. Verfahren nach Anspruch 1, wobei Dichtungsringe oder O-Ringe an dem Körper an dem Ende angebracht werden, wo die Aussparung liegt, um Leckagen zwischen den Vertiefungen zu vermeiden.

3. Array-Platte mit:
a) Einem Wafer (1050), der eine Vielzahl von Arrays auf seiner Oberfläche aufweist,
b) einem Körper (1040), der eine Vielzahl von Hohlräumen aufweist, die die Wände (1030) von Vertiefungen (1020) in dem Körper bilden, wobei jeder Hohlraum an zwei Enden offen ist und wobei jeder Hohlraum (1040) eine Aussparung (1060) in der Wand (1030) an einem der Enden hat,
c) wobei der Wafer durch Klebstoff an einem Ende des Körpers fest befestigt ist, wobei der Klebstoff in die Aussparung der Wand eingebracht ist.

4. Array-Platte nach Anspruch 3, wobei Dichtungsringe oder O-Ringe in den Körperwänden an den Enden des Körpers, wo die Aussparung liegt, angebracht sind, um Leckagen zwischen den Vertiefungen zu vermeiden.

5. Verfahren zum Herstellen einer Array-Platte, wobei bei dem Verfahren
a) ein Körper mit einer Mehrzahl von Hohlräumen bereitgestellt wird, die Wände von Vertiefungen in dem Körper bilden, wobei der Körper an zwei Enden offen ist und der Körper Dichtungsringe oder O-Ringe an den Wänden an einem seiner Enden hat,
b) ein Wafer mit einer Mehrzahl von Arrays auf seiner Oberfläche bereitgestellt wird,
c) eine Klemmplatte bereitgestellt wird,
d) der Wafer über das Ende des Körpers, an dem die Dichtungsringe oder O-Ringe liegen, so ausgerichtet wird, dass die Hohlräume auf dem Wafer platziert werden, wobei die Hohlräume ein Array umgeben und einschließen,
e) der Wafer fest an dem Körper unter Verwendung der Klemmplatte befestigt wird, und
f) die Klemmplatte fest an dem Körper außerhalb des Umfangs des Wafers befestigt wird.

6. Array-Platte mit:
a) Einem Wafer (1110) mit einer Mehrzahl von Arrays auf seiner Oberfläche,
b) einem Körper (1120) mit einer Mehrzahl von Hohlräumen, die Wände (1130) von Vertiefungen (1140) in dem Körper bilden, wobei jeder Hohlraum an zwei Enden offen ist und wobei der Körper an einem der Enden Dichtungsringe oder O-Ringe (1150) an den Wänden (1130) hat,
c) einer Klemmplatte (1160),
d) wobei der Wafer (1110) fest an dem Ende des Körpers (1120) befestigt ist, unter Verwendung der Klemmplatte (1160), wo die Dichtungsringe oder O-Ringe (1150) liegen.

## Revendications

1. Procédé de fabrication d'un plateau à réseau, comprenant les étapes consistant à
a) fournir un corps comprenant une pluralité de cavités, dans lequel chaque cavité est ouverte aux deux extrémités et possède un évidement à une de ses extrémités ;
b) fournir une tranche comprenant une pluralité de réseaux sur sa surface ;
c) appliquer un adhésif dans l'évidement du corps ;
d) aligner le corps sur la tranche de façon à ce que les cavités soient placées sur la tranche en entourant et en enfermant un réseau ; et
e) fixer la tranche sur le corps pour former des puits.

2. Procédé selon la revendication 1, dans lequel des garnitures ou des joints toriques d'étanchéité sont montés sur le corps à l'extrémité du corps où est situé l'évidement afin d'empêcher les fuites entre les puits.

3. Plateau à réseau comprenant :
a) une tranche (1050) comprenant une pluralité de réseaux sur sa surface ;
b) un corps (1040) comprenant une pluralité de cavités formant des parois (1030) de puits (1020) sur le corps, dans lequel chaque cavité est ouverte aux deux extrémités ; et dans lequel chaque cavité (1040) possède un évidement (1060) dans la paroi (1030) à une des extrémités ;
c) ladite tranche est fixée à une extrémité du corps au moyen d'un adhésif, dans lequel l'adhésif est appliqué sur l'évidement de la paroi.

4. Plateau à réseau selon la revendication 3, dans lequel des garnitures ou des joints toriques d'étanchéité sont montés sur les parois du corps à l'extrémité du corps où est placé l'évidement afin d'empêcher les fuites entre les puits.

5. Procédé de fabrication d'un plateau à réseau, comprenant les étapes consistant à
a) fournir un corps comprenant une pluralité de cavités qui forment des parois de puits sur le corps, dans lequel le corps est ouvert aux deux extrémités et dans lequel le corps possède des garnitures ou des joints toriques d'étanchéité sur les parois à une de ses extrémités ;
b) fournir une tranche comprenant une pluralité de plateaux sur sa surface ;
c) fournir une plaque de serrage ;
d) aligner la tranche sur l'extrémité du corps où sont placées les garnitures ou les joints toriques d'étanchéité de façon à ce que les cavités soient placées sur la tranche en entourant et en enfermant un réseau ;
e) fixer la tranche sur le corps en utilisant la plaque de serrage ; et
f) fixer la plaque de serrage sur le corps à l'extérieur du pourtour de la tranche.

6. Plaque à réseau comprenant :
a) une tranche (1110) comprenant une pluralité de réseaux sur sa surface ;
b) un corps (1120) comprenant une pluralité de cavités qui forment des parois (1130) de puits (1140) sur le corps, dans lequel chaque cavité est ouverte à ses deux extrémités ; et dans lequel le corps possède des garnitures ou des joints toriques d'étanchéité (1150) sur les parois (1130) des extrémités ;
c) une plaque de serrage (1160) ;
d) ladite tranche (1110) est reliée fixement à l'extrémité du corps (1120) où sont placés les garnitures ou les joints toriques d'étanchéité (1150) en utilisant la plaque de serrage (1160).
